(19) Europäisches Patentamt
European Patent Office
Office européen des brevets

(11) **EP 4 730 622 A1**

(12) **EUROPEAN PATENT APPLICATION**

(43) Date of publication:
**22.04.2026  Bulletin 2026/17**

(21) Application number: **25209050.1**

(22) Date of filing: **16.10.2025**

(51) International Patent Classification (IPC):
**H02K 3/28** *(2006.01)*      **H02K 3/12** *(2006.01)*

(52) Cooperative Patent Classification (CPC):
**H02K 3/28;** H02K 3/12

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.10.2024  KR 20240143029**
**03.04.2025  KR 20250043275**

(71) Applicant: **Hyundai Mobis Co., Ltd.**
**Gangnam-gu**
**Seoul 06141 (KR)**

(72) Inventor: **LEE, Jae Min**
**16891 Yongin-si, Gyeonggi-do (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **CONTINUOUS WINDING ASSEMBLY**

(57)   The present disclosure relates to a continuous winding assembly, and more particularly, to a continuous winding assembly wound on a motor stator. The continuous winding assembly of the present disclosure satisfies the balance of back electromotive force and inductance by having windings between each parallel circuit, which are interconnected to form a series winding, and adopt a specific pitch and shape, and allows each wire to be connected to be positioned in the same phase to enable welding without twisting, thereby having the effect of easily forming a series winding without a terminal assembly.

FIG. 3

# Description

## TECHNICAL FIELD

The following disclosure relates to a continuous winding assembly, and more particularly, to a continuous winding assembly wound on a motor stator.

## BACKGROUND

In motor design, applying each winding maximizes a slot filling ratio, enabling miniaturization of a motor. When inserting each winding into a slot, unlike a circular wire, there is a layer concept, and an inductance varies for each layer. In addition, since a back electromotive force phase is different for each slot, when applying a parallel circuit, a balanced winding layout design is essential to eliminate the inductance difference and back electromotive force phase difference between parallels. When such an imbalance occurs, a circulating current may occur, which may lead to motor overheating. Accordingly, the rules for arranging coils in slots and layers were very limited.

Like hairpin windings, continuous windings also require winding layout that considers the inductance balance and the back electromotive force phase balance. However, the hairpin windings should be arranged at the same pitch due to restrictions on welded parts, whereas the continuous windings have the advantage of high freedom in arranging pitches on both sides of the crown because there are no welded parts. However, this degree of freedom may also act as a disadvantage that increases the complexity of design. In particular, when a terminal assembly is required, it may be disadvantageous in terms of cost and quality due to increased material costs, the increased number of welding operations, and process complexity.

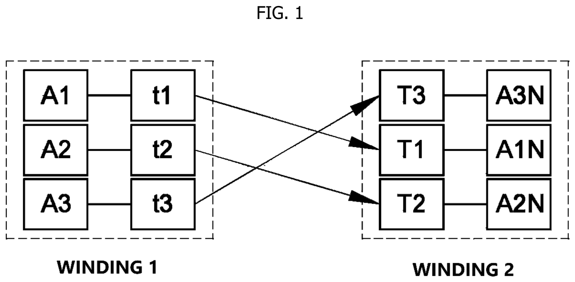

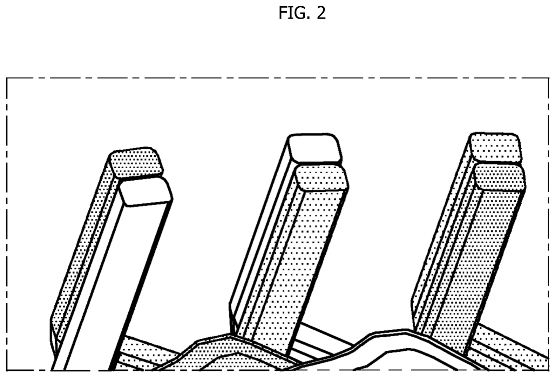

In addition, when connecting windings between parallel circuits using continuous windings to form a series winding, as illustrated in FIGS. 1 and 2, there were cases where the connection structure of the windings between the parallel circuits was misaligned in order to maintain the balance of the back electromotive force and inductance. In other words, as illustrated in FIG. 2, since the windings of the same phase (same color) should be connected to each other when the windings are arranged, there was a problem that the terminal assembly had to be used to implement this.

[Related Art Document]

[Patent Document]

(Patent Document 1) US Patent No. 7269888 "Method of making cascaded multilayer stator winding with interleaved transitions"

# SUMMARY

An embodiment of the present disclosure is directed to improving a continuous winding assembly that satisfies a balance of back electromotive force and inductance by having windings between each parallel circuit, which are interconnected to form a series winding, adopt a specific pitch and shape, and allows each wire to be connected to be positioned in the same phase to enable welding without twisting, thereby easily forming a series winding without a terminal assembly.

In one general aspect, a continuous winding assembly applied to a stator, the stator including, for each pole of a rotor, a predetermined group of slots adjacent and provided at continuous positions to one pole of the rotor includes: a first winding portion that includes a plurality of windings extending along a circumferential direction of the stator, arranged in parallel with each other, and having a non-standard pitch, each of which is wound by being inserted one by one into the slots included in the slot group; and a second winding portion that is electrically connected to the first winding portion, and includes the plurality of windings extending along the circumferential direction of the stator, arranged in parallel with each other, and having the non-standard pitch, each of which is wound by being inserted one by one into the slots included in the slot group, in which each of the windings of the first winding portion and each of the windings of the second winding portion are connected in a one-to-one correspondence with each other, but are connected to each other by being in direct contact with each other.

An end of the second winding portion may be inserted into the slot group adjacent to the slot group into which an end of the winding of the first winding portion is inserted.

The winding may include: a plurality of slot insertion portions that are inserted into the slots and extend in an axial direction of a motor; and a jump portion that is provided between the slot insertion portions and extends by a predetermined pitch.

The winding may include: among layers of wires laminated radially in the slots, a single-layer part that is wound on one of the layers, in which the one single-layer part includes the slot insertion portions that are inserted one by one per slot group adjacent to all the poles, and at least a layer jump part that is provided between two or more of the single-layer parts when the number of single-layer parts are two or more and crosses two or more of the layers.

The jump portion or the layer jump part included in the first winding portion and the second winding portion may have a pitch value selected from among 7 pitches and 10 pitches, and the jump portions of 10 pitches may intersect each other, and the jump portions of 7 pitches may not intersect with other jump portions.

A total number of layers in which the first winding portion and the second winding portion are wound may be a multiple of 3.

The number N1 of the layer jump parts included in each parallel winding of the first winding portion and the number N2 of the layer jump parts included in each parallel winding of the second winding portion may follow the Equation below.

$$N1 = p(k-1)$$
$$\text{Equation: } N2 = q(m-k-1)$$

(Here,

N1: The number of layer jump parts of the winding of the first winding portion
N2: The number of layer jump parts of the winding of the second winding portion
p, q: Constants (integers greater than or equal to 1)
m: Total number of layers (multiples of 3)
k: The number of odd-numbered layers based on a radial direction)

When the total number of poles of the motor is S, the layer jump part may be formed between the slot insertion portion in which each of the windings is wound for an nSth time and the slot insertion portion in which each of the windings is wound for an nS+1th time (n is a natural number).

The single layer part of the first winding portion may be wound on an odd-numbered layer based on the radial direction, and the single layer part of the second winding portion may be wound on an even-numbered layer based on the radial direction.

The layer jump part may traverse either the odd-numbered or the even-numbered layer based on the radial direction.

**BRIEF DESCRIPTION OF THE DRAWINGS**

FIG. 1 is a schematic diagram illustrating a winding configuration and its connection relationship of the related art.
FIG. 2 is a partial perspective view illustrating a coupling relationship between windings of the related art.
FIG. 3 is a schematic diagram illustrating a winding configuration and its connection relationship of the present disclosure.
FIG. 4 is a partial plan view illustrating a layer of a winding of the present disclosure.
FIG. 5 is a schematic diagram illustrating an arrangement of a first winding of the present disclosure.
FIG. 6 is a schematic diagram illustrating an arrangement of a second winding of the present disclosure.
FIG. 7 is a partial perspective view illustrating a coupling relationship of the first and second windings of the present disclosure.

[Detailed Description of Main Elements]

1000: Continuous winding assembly
100: First winding portion
110: First wire
120: Second wire
130: Third wire
200: Second winding portion
210: Fourth wire
220: Fifth wire
230: Sixth wire
300: Slot insertion portion
400: Jump portion
500: Single-layer part
600: Layer jump part
L-1: First layer
L-2: Second layer
L-3: Third layer
St: Stator
SG: Slot group
S-X: X slot
S-Y: Y sloth
S-Z: Z slot

**DETAILED DESCRIPTION OF EMBODIMENTS**

Hereinafter, a technical idea of the present disclosure will be described in more detail with reference to the accompanying drawings. Terms and words used in the present specification and claims are not to be construed as a general or dictionary meaning, but are to be construed as meaning and concepts meeting the technical ideas of the present disclosure based on a principle that the present inventors may appropriately define the concepts of terms in order to describe their inventions in best mode.

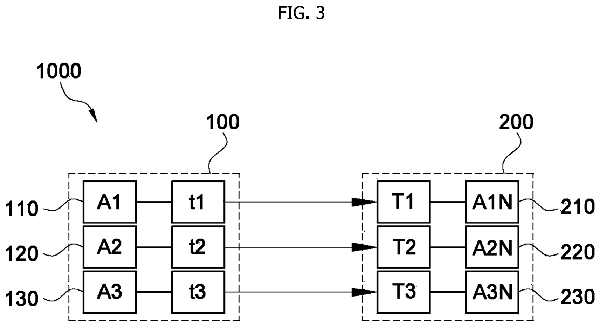

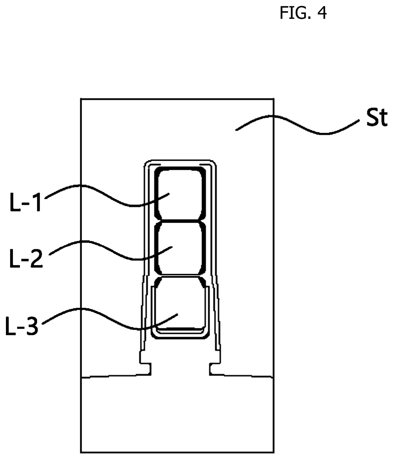

Hereinafter, a basic configuration of the continuous winding assembly 1000 of the present disclosure will be described with reference to FIGS. 3 and 4.

The continuous winding assembly 1000 of the present disclosure is applied to a stator, in which the stator includes, for each pole of a rotor, a predetermined group of slots adjacent and provided at continuous positions to the poles of the rotor. As illustrated in FIG. 3, the continuous winding assembly 1000 may include a first winding portion 100 and a second winding portion 200. In more detail, the first winding portion 100 may include a plurality of windings that extend along a circumferential direction of the stator, and are wound by being inserted one by one into the slots included in the slot group, and the second winding portion 200 is electrically connected to the first winding portion 100, and includes a plurality of windings that extend along the circumferential direction of the stator and are wound by being inserted one by one into the slots included in the slot group. The windings included in the first winding portion 100 and the second winding portion 200 are inserted into slots in a radial direction to form a plurality of layers, and each of the windings included in the first winding portion 100 and the second winding portion 200 may have a non-standard pitch.

In more detail, each wire, that is, the windings included in the first winding portion 100 and the second winding portion 200 may include a plurality of slot insertion portions 300 that are inserted into slots and extend in the axial direction of the motor, and a jump portion 400 that is provided between the slot insertion portions 300 and extends by a predetermined pitch. In addition, as illustrated in FIG. 4, the number of layers of wires laminated in the slot may be provided in multiples of 3 from an innermost side of the slot. More specifically, as illustrated in FIG. 4, three layers may be provided. In the following description, the description is based on three layers, and each layer is named a first layer L-1, a second layer L-2, and a third layer L-3. In addition, each slot group may be composed of three consecutive slots, and preferably includes an X slot S-X provided on one edge of the slots, a Y slot S-Y located in the center of the slots, and a Z slot S-Z located on the other edge of the slots.

In addition, ends of the first winding portion 100 and the second winding portion 200 of the continuous winding assembly 1000 of the present disclosure, which are connected to each other, may be wound in slots adjacent to each other, and the ends of the first winding portion 100 and the end of the second winding portion 200, which correspond to each other, may be arranged on the same phase. For example, when a t1 end of the first winding portion 100 corresponds to a T1 end of the second winding portion 200, the t1 end of the first winding portion 100 and the T1 end of the second winding portion 200 are wound on an X slot S-X of each of the slot groups adjacent to each other. Accordingly, the end of the first winding portion 100 and the end of the second winding portion 200 may be welded to each other without a separate jumper wire or terminal assembly, thereby creating the effect of saving raw materials and shortening the process.

In addition, each winding included in the first winding portion 100 and the second winding portion 200 may include a single-layer part 500 that is wound on one layer. The single-layer winding portion may include one slot insertion portion 300 that is inserted per slot group Sg adjacent to all poles. In all the jump portions 400 included in the single-layer part 500, the windings may not intersect each other. That is, the pitches of the jump portions 400 of the windings arranged in parallel with each other may have any one pitch value selected from among 7 pitches and 10 pitches. In this case, the jump portions 400 of 10 pitches may intersect each other, and the jump portions 400 of 7 pitches may not intersect other jump portions 400. Accordingly, the overlap between the first winding portion 100 and the second winding portion 200 may be minimized, and accordingly, the width of the radial area to be wound may be reduced, thereby reducing the radial size of the motor system.

In addition, each winding included in the first winding portion 100 and the second winding portion 200 may include at least one layer jump part 600 that is provided between two or more single-layer parts 500 and crosses two or more layers when there are two or more single-layer parts 500. Each winding in the jump portions 400 included in the layer jump part 600 may cross each other. The layer jump part 600 can have any one pitch value selected from among 7 pitches and 10 pitches. Accordingly, even if the jump portions 400 in the single-layer part 500 is formed with a non-standard pitch as described above, the ends of the first winding portion 100 and the second winding portion 200, which are connected to each other, may be arranged on the same phase of the slot group Sg. For example, a t1 end of the first winding portion 100 and a T1 end of the second winding portion 200 that are coupled to each other may be wound on the X slot S-X of the adjacent slot group Sg, respectively.

In more detail, the single-layer part 500 of the first winding portion 100 may be wound on an odd-numbered layer based on the radial direction. That is, when three layers are provided based on the radial direction, the single-layer part 500 of each parallel winding of the first winding portion 100 may be wound on the first layer L-1 and the third layer L-3. In addition, the single-layer part 500 of the second winding portion 200 may be wound on the even-numbered layer based on the radial direction. That is, when six layers are provided based on the radial direction, the single-layer part 500 of each parallel winding of the second winding portion 200 may be wound on the second layer L-2.

In this case, the layer jump part 600 included in the first winding portion 100 and the second winding portion 200 may be provided to traverse at least one of the odd-numbered layer or the even-numbered layer, regardless of whether it is the odd-numbered layer or the even-numbered layer. For example, a layer jump part 600 having a single layer part 500 in the first layer L-1 of the first winding portion 100 and a single layer part 500 in the third layer L-3 may be formed to pass through the second layer L-2 in between in addition to the first layer L-1 and the third layer L-3.

In addition, the number N1 of layer jump parts 600 included in each of the parallel windings included in the first winding portion 100 may follow Equation 1 below.

Equation 1: $N1 = p(k\text{-}1)$

Here, N1 is the number of layer jump parts 600 of the winding of the second winding portion 200, p is a constant (an integer greater than or equal to 1), m is the total number of layers (a multiple of 3), and k is the number of odd-numbered layers in the radial direction. That is, when p is 1, one continuous single-layer part 500 is formed to include the slot insertion portions 300 corresponding to all poles in the circumferential direction, and when p is greater than or equal to 2, one continuous single-layer part 500 is formed to include the slot insertion portions 300 corresponding to only some of the poles in the circumferential direction (e.g., winding only in 1/2 or 1/4 of the circumferential direction), so that the layer jump parts 600 are provided more densely.

In addition, the number N2 of layer jump parts included in each parallel winding of the second winding portion 200 may follow Equation 2 below.

$$\text{Equation 2:} \quad N2 = q(m\text{-}k\text{-}1)$$

Here, N2 is the number of layer jump parts 600 of the winding of the second winding portion 200, q is a constant (an integer greater than or equal to 1), m is the total number of layers (a multiple of 3), and k is the number of odd layers in the radial direction. That is, when q is 1, one continuous single-layer part 500 is formed to include the slot insertion portions 300 corresponding to all poles in the circumferential direction, and when q is greater than or equal to 2, one continuous single-layer part 500 is formed to include the slot insertion portions 300 corresponding to only some of the poles in the circumferential direction (e.g., winding only in 1/2 or 1/4 of the circumferential direction), so that the layer jump parts 600 are provided more densely.

In addition, when the total number of poles of the motor is S, the layer jump part 600 may be formed between the slot insertion portion 300 in which each of the windings is wound for the nSth time and the slot insertion portion 300 in which each of the windings is wound for the nS+1th time. In this case, n is a natural number. More specifically, when the total number of poles of the motor is 8, the layer jump part 600 may be formed between the slot insertion portion 300 in which each of the windings is wound as a multiple of 8, such as 8th, 1sixth, 24th, ..., and the slot insertion portion 300 adjacent thereto, that is, the slot insertion portion 300 in which the windings are wound as 9th, 17th, 25th, ..., etc.

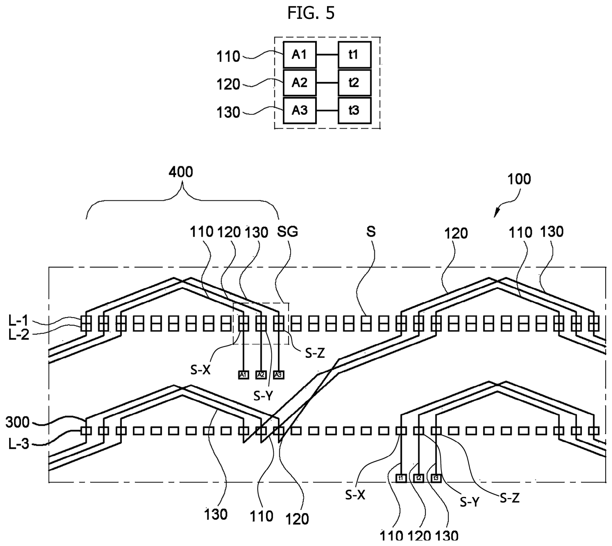

Hereinafter, a specific winding method of the first winding portion 100 of the present disclosure will be described in more detail with reference to FIG. 5.

As illustrated in FIG. 5, the first winding portion 100 may include a first wire 110, a second wire 120, and a third wire 130 that are wound in parallel with each other. Each of the first wire 110, the second wire 120, and the third wire 130 may be wound three times around the stator along the circumferential direction, and may be wound on the first layer L-1 and the third layer L-3, respectively. In addition, the first wire 110, the second wire 120, and the third wire 130 are configured as a combination in which the pitch of the jump portion 400 is repeated 7 pitches once and 10 pitches twice, and this is formed in the same way in the jump section of the layer. Accordingly, the manufacturing efficiency of the first winding portion 100 may be increased.

In more detail, the first wire 110 of the first winding portion 100 may be provided with the jump portions 400 that are repeatedly arranged in the order of 7 pitches, 10 pitches, and 10 pitches along the extension direction from one end of the first wire 110, in the first layer L-1, the slot insertion portion 300 of one end of the first wire 110 may be inserted into the X slot S-X and the subsequent slot insertion portions 300 may be repeatedly inserted in the order of the Z slot S-Z, the Y slot S-Y, and the X slot S-X, the slot insertion portion 300 that comes into contact with the jump portions 400 provided between the first layer L-1 and a third layer L-3 may be inserted into the Y slot S-Y and the subsequent slot insertion portions 300 may be repeatedly inserted in the order of the X slot S-X, the Z slot S-Z, and the Y slot S-Y, and the slot insertion portion 300 of the other end of the first wire 110 may be formed to be inserted into the X slot.

The second wire 120 of the first winding portion 100 may be provided with jump portions 400 that are repeatedly arranged in the order of 10 pitches, 7 pitches, and 10 pitches along the extension direction from one end of the second wire 120, in the first layer L-1, the slot insertion portion 300 of one end of the second wire 120 may be inserted into the Y slot S-Y, and the subsequent slot insertion portions 300 may be repeatedly inserted in the order of the X slot S-X, the Z slot S-Z, and the Y slot S-Y, the slot insertion portion 300 that comes into contact with the jump portions 400 provided between the first layer L-1 and the third layer L-3 may be inserted into the Z slot S-Z and the subsequent slot insertion portions 300 may be repeatedly inserted in the order of the Y slot S-Y, the X slot S-X, and the Z slot S-Z, and the slot insertion portion 300 of the other end of the second wire 120 may be formed to be inserted into the Y slot.

The third wire 130 of the first winding portion 100 may be provided with the jump portions 400 that are repeatedly arranged in the order of 10 pitches, 10 pitches, and 7 pitches along the extension direction from one end of the third wire 130, in the first layer L-1, the slot insertion portion 300 of one end of the third wire 130 may be inserted into the Z slot S-Z and the subsequent slot insertion portions 300 may be repeatedly inserted in the order of the Y slot S-Y, the X slot S-X, and the Z slot S-Z, the slot insertion portion 300 that comes into contact with a jump portion 400 provided between the first layer L-1 and the third layer L-3 may be inserted into the X slot S-X and the subsequent slot insertion portions 300 may be repeatedly inserted in the order of the Z slot S-Z, the Y slot S-Y, and the X slot S-X, and the slot insertion portion 300 of the other end of the third wire 130 may be formed to be inserted into the Z slot.

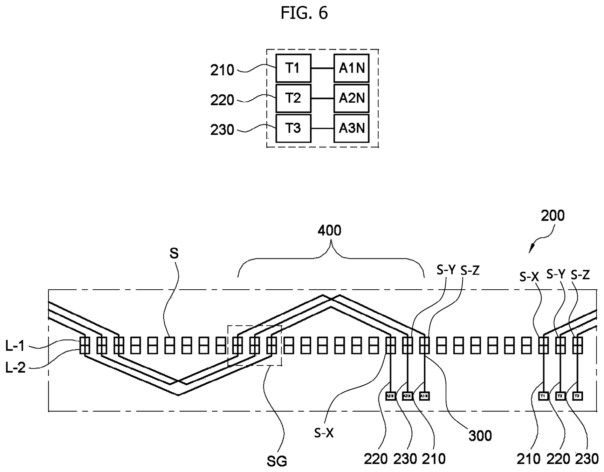

Hereinafter, a specific winding method of the second winding portion 200 of the present disclosure will be described in more detail with reference to FIG. 6.

As illustrated in FIG. 6, the second winding portion 200 may include a fourth wire 210, a fifth wire 220, and a sixth wire 230 that are wound in parallel with each other. Each of the fourth wire 210, the fifth wire 220, and the sixth wire 230 may be wound three times along the circumferential direction around the stator, and may be wound on the second layer L-2. In addition, the fourth wire 210, the fifth wire 220, and the sixth wire 230 may be irregularly configured as a combination of 7 to 11 pitches of the jump portion 400. This is to satisfy the balance of the back electromotive force phase and inductance in relation to the first winding portion 100, and at the same time, to ensure that the end of the wire of the second winding portion 200 is provided in an adjacent slot with the end of the wire of the first winding portion 100, but is positioned in the same phase.

In more detail, the fourth wire 210 of the second winding portion 200 may be provided with the jump portions 400 in the order of 10 pitches, 8 pitches, 10 pitches, 10 pitches, 7 pitches, 10 pitches, and 10 pitches along the extension direction from one end of the fourth wire 210 to the other end, and in the second layer L-2, the slot insertion portion 300 of one end of the fourth wire 210 may be inserted into the Z slot S-Z, and the subsequent slot insertion portions 300 may be repeatedly inserted in the order of the Y slot S-Y, the Z slot S-Z, the Y slot S-Y, the X slot, the Z slot, the Y slot, and the X slot, and the slot insertion portion 300 of the other end of the fourth wire 210 may be inserted into the X slot.

In addition, the fifth wire 220 of the second winding portion 200 may be provided with the jump portions 400 in the order of 7 pitches, 11 pitches, 7 pitches, 10 pitches, 10 pitches, 7 pitches, and 10 pitches along the extension direction from one end of the fifth wire 220 to the other end, in the second layer L-2, the slot insertion portion 300 of one end of the fifth wire 220 may be inserted into the X slot S-X and the subsequent slot insertion portions 300 are repeatedly inserted in the order of the Z slot S-Z, the X slot S-X, the Z slot S-Z, the Y slot, the X slot, the Z slot, and the Y slot, and the slot insertion portion 300 of the other end of the fifth wire 220 may be inserted into the Y slot.

In addition, the sixth wire 230 of the second winding portion 200 may be provided with the jump portions 400 in the order of 10 pitches, 8 pitches, 10 pitches, 7 pitches, 10 pitches, 10 pitches, and 7 pitches along the extension direction from one end of the sixth wire 230 to the other end, in the second layer L-2, the slot insertion portion 300 of one end of the sixth wire 230 may be inserted into the Y slot S-Y and the subsequent slot insertion portions 300 may be repeatedly inserted in the order of the X slot S-X, the Y slot S-Y, the X slot S-X, the Z slot, the Y slot, the X slot, and the Z slot, and the slot insertion portion 300 of the other end of the sixth wire 230 may be inserted into the Z slot.

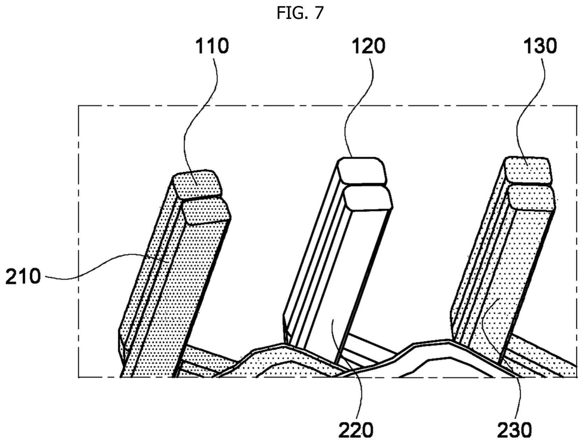

Hereinafter, the coupling relationship between the first winding portion 100 and the second winding portion 200 of the present disclosure will be described in more detail with reference to FIG. 7.

When analyzing the balance of the back electromotive force phase and inductance in the arrangement of the first winding portion 100 and the second winding portion 200 described above, in the case of the first wire 110 and the fourth wire 210 connected to each other, the number of slots in which the first wire 110 is wound is 8 in the first layer L-1 and 8 in the third layer L-3, and the number of slots in which the fourth wire 210 is wound is 8 in the second layer L-2, so it may be confirmed that the inductance phase is balanced. In addition, as a result of counting the number of times the first wire 110 is wound in the X slot S-X, the Y slot S-Y, and the Z slot S-Z of the first layer L-1, it may be confirmed that the number of times the first wire 110 is wound is three times, twice, and three times, respectively, as a result of counting the number of times the first wire 110 is wound in the X slot S-X, the Y slot S-Y, and the Z slot S-Z of the third layer L-3, it may be confirmed that the number of times the first wire 110 is wound is three times, three times, and twice, and as a result of counting the number of times the fourth wire 210 is wound in the X slot S-X, the Y slot S-Y, and the Z slot S-Z of the second layer L-2, it may be confirmed that the number of times the fourth wire 210 is wound is twice, three times, and three times, respectively. As a result, the sum of the number of times the series-connected windings of the first wire 110 and the fourth wire 210 pass through each of the X slot S-X, the Y slot S-Y, and the Z slot S-Z is equal to 8, so it was confirmed that the back electromotive force phase is also balanced.

In addition, in the case of the second wire 120 and the fifth wire 220 that are connected to each other, the number of slots in which the second wire 120 is wound is 8 in the first layer L-1, 8 in the third layer L-3, and the number of slots in which the fourth wire 210 is wound is 8 in the second layer L-2, so it may be confirmed that the inductance phase is balanced. In addition, as a result of counting the number of times the second wire 120 is wound in the X slot S-X, the Y slot S-Y, and the Z slot S-Z of the first layer L-1, it may be confirmed that the number of times the second wire 120 is wound is three times, three times, and twice, respectively, as a result of counting the number of times the second wire 120 is wound in the X slot S-X, the Y slot S-Y, and the Z slot S-Z of the third layer L-3, it may be confirmed that the number of times the second wire 120 is wound is twice, three times, and three times, and as a result of counting the number of times the fifth wire 220 is wound in the X slot S-X, the Y slot S-Y, and the Z slot S-Z of the second layer L-2, it may be confirmed that the number of times the fifth wire 220 is wound is three times, twice, and times, respectively. As a result, the sum of the number of times the series-connected windings of the second wire 120 and the fifth wire 220 pass through each of the X slot S-X, the Y slot S-Y, and the Z slot S-Z is equal to 8, so it was confirmed that the back electromotive force phase is also balanced.

In addition, in the case of the third wire 130 and the sixth wire 230 that are connected to each other, the number of slots in which the third wire 130 is wound is 8 in the first layer L-1, 8 in the third layer L-3, and the number of slots in which the sixth wire 230 is wound is 8 in the second layer L-2, so it may be confirmed that the inductance phase is balanced. In addition, as a result of counting the number of times the third wire 130 is wound in the X slot S-X, the Y slot S-Y, and the Z slot S-Z of the first layer L-1, it may be confirmed that the number of times the third wire 130 is wound is twice, three times, and three times, respectively, as a result of counting the number of times the third wire 130 is wound in the X slot S-X, the Y slot S-Y, and the Z slot S-Z of the third layer L-3, it may be confirmed that the number of times the third wire 130 is wound is three times, twice, and three times, and as a result of counting the number of times the sixth wire 230 is wound in the X slot S-X, the Y slot S-Y, and the Z slot S-Z of the second layer L-2, it may be confirmed that the number of times the fifth wire 220 is wound is three times, three times, and twice, respectively. As a result, the sum of the number of times the series-connected windings of the second wire 120 and the fifth wire 220 pass through each of the X slot S-X, the Y slot S-Y, and the Z slot S-Z is equal to 8, so it was confirmed that the back electromotive force phase is also balanced.

In addition, as illustrated in FIG. 7, the other end of the first wire 110 of the first winding portion 100 and the other end of the fourth wire 210 of the second winding portion 200 may be drawn from the same phase X slot S-X of the adjacent slot group and connected to each other. In addition, the other end of the second wire 120 of the first winding portion 100 and the other end of the fifth wire 220 of the second winding portion 200 may be drawn from the same phase Y slot S-Y of the adjacent slot group and connected to each other. The other end of the third wire 130 of the first winding portion 100 and the other end of the sixth wire 230 of the second winding portion 200 may be connected to each other by being drawn out from the same Z slot S-Z of an adjacent slot group. Accordingly, the end of the first winding portion 100 and the end of the second winding portion 200 may be welded to each other without a separate jumper wire or terminal assembly, thereby creating the effect of saving raw materials and shortening the process.

The continuous winding assembly of the present disclosure having the configuration described above satisfies back electromotive force and inductance balance by having windings between each parallel circuit, which are interconnected to form a series winding, adopt a specific pitch and shape, and allows each wire to be connected to be positioned in the same phase to enable welding without twisting, thereby having the effect of easily forming a series winding without a terminal assembly.

The present disclosure should not be construed to being limited to the above-mentioned exemplary embodiment. The present disclosure may be applied to various fields and may be variously modified by those skilled in the art without departing from the scope of the present disclosure claimed in the claims. Therefore, it is obvious to those skilled in the art that these alterations and modifications fall in the scope of the present disclosure.

**Claims**

1. A continuous winding assembly applied to a stator, the stator including, for each pole of a rotor, a predetermined group of slots adjacent and provided at continuous positions to one pole of the rotor, the continuous winding assembly comprising:

   a first winding portion that includes a plurality of windings extending along a circumferential direction of the stator, arranged in parallel with each other, and having a non-standard pitch, each of which is wound by being inserted one by one into the predetermined group of slots; and
   a second winding portion that is electrically connected to the first winding portion, and includes the plurality of windings extending along the circumferential direction of the stator, arranged in parallel with each other, and having the non-standard pitch, each of which is wound by being inserted one by one into the predetermined group of slots,
   wherein each of the plurality of windings of the first winding portion and each of the plurality of windings of the second winding portion are connected in a one-to-one correspondence with each other, and are connected to each other by being in direct contact with each other.

2. The continuous winding assembly of claim 1, wherein an end of the second winding portion is inserted into a first group of slots of the predetermined group of slots adjacent to a second group of slots of the predetermined group of slots into which an end of a winding of the plurality of windings of the first winding portion is inserted.

3. The continuous winding assembly of claim 1 or 2, wherein the plurality of windings includes:

   a plurality of slot insertion portions that are inserted into the predetermined group of slots and extend in an axial direction of a motor; and
   a jump portion that is provided between the plurality of slot insertion portions and extends by a predetermined pitch.

4. The continuous winding assembly of claim 3, wherein the plurality of windings includes:

   among layers of wires laminated radially in the predetermined group of slots, one or more single-layer parts that is wound on one of the layers of wires,

the single-layer part including the plurality of slot insertion portions that are inserted one by one per slot of the predetermined group of slots adjacent to the pole, and

at least a layer jump part that is provided between one or more of the single-layer parts in response to a number of one or more single-layer parts being two or more, and crosses two or more of the layers of wires.

5.  The continuous winding assembly of claim 4, wherein the jump portion or the layer jump part included in the first winding portion has a pitch value selected from the group consist of 7 pitches and 10 pitches, and
    wherein the jump portions or the layer jump part of 10 pitches intersect each other, and the jump portions or the layer jump part of 7 pitches do not intersect with other jump portions.

6.  The continuous winding assembly of claim 4 or 5, wherein the jump portion or the layer jump part included in the second winding portion has a pitch value selected from the group consist of 7 pitches and 10 pitches or 8 pitches and 11 pitches, and
    wherein the jump portions or the layer jump part of 10 pitches intersect each other, and the jump portions or the layer jump part of 7 pitches do not intersect with other jump portions,
    wherein the jump portions or the layer jump part of 8 pitches intersect each other, and the jump portions or the layer jump part of 11 pitches do not intersect with other jump portions.

7.  The continuous winding assembly of any one of claims 1 to 6, wherein a total number of layers in which the first winding portion and the second winding portion are wound is a multiple of 3.

8.  The continuous winding assembly of any one of claims 4 to 7, wherein a number of the layer jump part included in each parallel winding of the first winding portion and a number of the layer jump part included in each parallel winding of the second winding portion follow the Equation below.

$$N1 = p(k-1)$$
Equation: $N2 = q(m-k-1)$

(Here,

N1: The number of layer jump part of the winding of the first winding portion
N2: The number of layer jump part of the winding of the second winding portion
p, q: Constants (integers greater than or equal to 1)
m: Total number of layers (multiples of 3)
k: The number of odd-numbered layers based on a radial direction)

9.  The continuous winding assembly of any one of claims 4 to 8, wherein a total number of the pole of the rotor is S, the layer jump part is formed between the slot insertion portion in which each of the plurality of windings is wound for an nSth time and the slot insertion portion in which each of the plurality of windings is wound for an nS+1th time (n is a natural number).

10. The continuous winding assembly of any one of claims 4 to 9, wherein a first single layer part of the first winding portion is wound on an odd-numbered layer in the radial direction, and
    a second single layer part of the second winding portion is wound on an even-numbered layer in the radial direction.

11. The continuous winding assembly of any one of claims 4 to 10, wherein the layer jump part traverses either the odd-numbered or the even-numbered layer in the radial direction.

FIG. 1

| A1 | t1 |
|----|----|
| A2 | t2 |
| A3 | t3 |

**WINDING 1**

| T3 | A3N |
|----|-----|
| T1 | A1N |
| T2 | A2N |

**WINDING 2**

FIG. 2

FIG. 3

FIG. 4

FIG. 5

FIG. 6

FIG. 7

Europäisches
Patentamt
European
Patent Office
Office européen
des brevets

# EUROPEAN SEARCH REPORT

**Application Number**

EP 25 20 9050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/140926 A1 (SCHAEFFLER TECHNOLOGIES AG [DE]; LI ZHIHAO [CN]) 7 July 2022 (2022-07-07) * abstract; figure 1 * ----- | 1-11 | INV. H02K3/28 ADD. H02K3/12 |

**TECHNICAL FIELDS SEARCHED (IPC)**

H02K

The present search report has been drawn up for all claims

| Place of search | Date of completion of the search | Examiner |
|---|---|---|
| Munich | 10 February 2026 | Türk, Severin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 9050

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2026

| Patent document cited in search report | Publication date | Patent family member(s) | Publication date |
|---|---|---|---|
| WO 2022140926 A1 | 07-07-2022 | CN 116250164 A<br>DE 112020007886 T5<br>US 2024297545 A1<br>WO 2022140926 A1 | 09-06-2023<br>12-10-2023<br>05-09-2024<br>07-07-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 7269888 B